Europäisches Patentamt

European Patent Office

Office européen des brevets

(19)

(11) Veröffentlichungsnummer: **0 009 252**
**B1**

(12) **EUROPÄISCHE PATENTSCHRIFT**

(45) Veröffentlichungstag der Patentschrift: **09.03.83**

(21) Anmeldenummer: **79103555.3**

(22) Anmeldetag: **20.09.79**

(51) Int. Cl.³: **G 01 F 23/24, G 01 K 7/18**

(54) **Vorrichtung zur Messung des Füllstandes in einem mit Flüssigkeit zumindest teilweise gefüllten Behälter.**

(30) Priorität: **26.09.78 DE 2841889**
**13.11.78 DE 2849143**

(43) Veröffentlichungstag der Anmeldung:
**02.04.80 Patentblatt 80/7**

(45) Bekanntmachung des Hinweises auf die Patenterteilung:
**09.03.83 Patentblatt 83/10**

(84) Benannte Vertragsstaaten:
**FR GB IT SE**

(56) Entgegenhaltungen:
**DE - A - 2 700 229**
**FR - A - 2 002 265**
**FR - A - 2 160 474**
**FR - B - 2 025 395**
**GB - A - 129 741**
**GB - A - 1 096 025**

(73) Patentinhaber: **SIEMENS AKTIENGESELLSCHAFT**
**Berlin und München Wittelsbacherplatz 2**
**D-8000 München 2 (DE)**

(72) Erfinder: **Heuwieser, Erwin**
**Ludwig-Thoma-Strasse 57**
**D-8013 Haar (DE)**
Erfinder: **Kammermaier, Johann, Dr.rer.nat.**
**Ziehrerstrasse 19**
**D-8025 Unterhaching (DE)**
Erfinder: **Rödl, Peter**
**Kaiserstrasse 20**
**D-8200 Rosenheim (DE)**

Courier Press, Leamington Spa, England.

## Vorrichtung zur Messung des Füllstandes in einem mit Flüssigkeit zumindest teilweise gefüllten Behälter

Die Erfindung betrifft eine Vorrichtung zur Messung des Füllstandes in einem mit Flüssigkeit zumindest teilweise gefüllten Behälter gemäß dem Oberbegriff des Patentanspruches 1.

Aus der DE—A—27 00 229 ist eine derartige Füllstandsmeßeinrichtung bekannt, welche aus einem dünnen Träger und einer darauf festhaftenden Leiterbahn, vorzugsweise aus Kupfer, besteht. Maßnahmen, durch welche insbesondere in einem Kraftstofftank eine Messung des Füllstandes mit hoher Meßgenauigkeit und mit geringem Energieaufwand sowie einer geringen Einstellzeit erfolgen kann, sind in der Druckschrift nicht angegeben.

Eine ähnliche Niveaustands-Meßeinrichtung ist aus der DE—AS—23 08 823 bekannt. In dieser Auslegeschrift wird vorgeschlagen, daß mehrere Mantelleiter um einen Trägerstab gewickelt werden, von denen ein Teil Widerstandsdrähte und stromdurchflossene Heizleiter, ein anderer Teil nur Widerstandsdrähte enthält. Aus diesen Widerstandsdrähten wird eine Widerstandsmeßbrücke aufgebaut, wobei die temperaturabhängigen Widerstandsdrähte eines beheizten Mantelleiters in einem Brückenzweig und diejenigen eines unbeheizten Mantelleiters in einem anderen Brückenzweig der Widerstandsmeßbrücke angeordnet sind. Die dort beschriebene Niveaustands-Meßeinrichtung dient insbesondere zur Messung des Flüssigkeitsstandes in Kernreaktor-Kraftwerken. Dort wird in der Regel der Füllstand von Wasser gemessen.

Zur Messung des Füllstandes von Kraftstoffen oder anderen leicht flüchtigen Verbindungen ist die letztgenannte Einrichtung nach dem Stand der Technik nicht geeignet. Die Masse des zu erwärmenden Meßkörpers ist im Verhältnis zu seiner von der Flüssigkeit erreichbaren Oberfläche sehr groß. Dadurch ergibt sich nicht nur eine große Trägheit der Anzeige und eine geringe Genauigkeit der Messung infolge der Wärmeableitung im Meßkörper, sondern es muß auch eine hohe Heizleistung aufgewendet werden, da innerhalb der Meßeinrichtung ein erheblicher Temperaturgradient vorhanden ist und da für eine Auswertung nur der mittlere Temperaturunterschied zwischen dem in der Flüssigkeit und dem außerhalb der Flüssigkeit befindlichen Teil der Meßeinrichtung ausgewertet werden kann. Dadurch bedingt wird der außerhalb der Flüssigkeit befindliche Teil relativ stark erhitzt, er kann eine Verdampfung der Flüssigkeit im Grenzbereich hervorrufen. Dies hat nicht nur einen Verlust an Flüssigkeit durch Verdampfung, sondern bei Verwendung für brennbare Flüssigkeiten auch eine erhöhte Explosionsgefahr zur Folge. Aufgrund der notwendigen Heizleistung und der niedrigen Wärmeleitfähigkeit von Treibstoffen tritt bei dieser Meßeinrichtung auch in dem innerhalb der Flüssigkeit liegenden Teil des Widerstandes eine stark signalschwächende Erwärmung auf.

An anderer Stelle wurde vorgeschlagen, die Änderung der Kapazität zwischen zwei benachbarten elektrischen Leitern oder Leiterflächen zur Bestimmung der Füllstandshöhe einzusetzen. Derartige Methoden bedingen einen relativ hohen apparativen Aufwand und sind anfällig gegen Verschmutzung während des Betriebes. Außerdem ist die Beeinflussing des Meßergebnisses durch unvermeidbare Zuleitungskapazitäten kaum auszuschalten.

Aufgabe der vorliegenden Erfindung ist es, eine Vorrichtung der eingangs genannten Art anzugeben, die die Messung des Füllstandes in Behältnissen mit geringem aparativen Aufwand, hoher Meßgenauigkeit und mit geringem Energieaufwand ermöglicht. Die Vorrichtung soll zur Messung von brennbaren, leicht flüchtigen Flüssigkeiten, vorzugsweise Vergaserkraftstoffen geeignet sein, wobei die Messung mit einer sehr geringen Einstellzeit erfolgen soll.

Diese Aufgabe wird bei einer Vorrichtung der eingangs genannten Art gemäß den kennzeichnenden Merkmalen des Patentanspruches 1 gelöst.

Diese Vorrichtung hat den Vorteil, daß die Masse der Trägerfolie gering gehalten werden kann, daß die Metallschicht sehr dünn aufgebracht werden kann und somit kein störender Gradient der Temperatur im Widerstand auftritt, daß aufgrund der geringen Masse der Vorrichtung und ihrer geringen Dicke keine störende Übergangszone im Bereich der Flüssigkeitsoberfläche auftritt und daß die Messung mit einer sehr geringen Einstellzeit erfölgen kann.

Die erfindungsgemäße Vorrichtung weist vorteilhaft eine Widerstandsschicht mit einem Verhältnis ihrer Breite zu ihrer Dicke von mehr als 100:1 auf. Dadurch ist gewährleistet, daß kein störender Temperaturgradient in der Schicht auftritt. Als isolierender Träger dient vorteilhaft eine Kunststoffolie. Diese ist beigsam, daher leicht zu behandeln und widerstandsfähig gegen mechanische Beanspruchungen, insbesondere bei Bewegungen der Flüssigkeit im Behälter. Eine störende Beeinflussung der Messung durch die Wärmekapazität des Trägers ist vermieden, wenn die Breite der Widerstandsschicht zumindest um den Faktor 10 größer ist als die Dicke der isolierenden Trägerfolie. Als Material für die vorzugsweise aufgedampfte Widerstandsschicht eignet sich insbesondere Eisen oder Nickel, da diese Metalle einen hohen Temperaturkoeffizienten des spezifischen Widerstandes aufweisen. Insbesondere das Nickel wird außerdem durch die zu messenden Flüssigkeiten nicht angegriffen. Widerstandsschichten aus Nickel und ihre Herstellung sind beispiels-

weise in der DE—PS—10 79 166 beschrieben, Gegenüber den organischen Verbindungen von Bergaserkraftstoffen ist auch Eisen beständig. Beide Materialien, Ni und Fe, können sehr dünn aufgedampft werden, so daß auch bei konstruktiv vorgegebenen, relativ geringen Längen der Widerstandsschicht der Widerstandswert in einem weiten Bereich eingestellt werden kann, wodurch eine hohe Meßempfindlichkeit erreichbar ist. Durch eine an die Größe der Flüssigkeitsoberfläche in Abhängigkeit von der Füllstandshöhe angepaßte Breite der Widerstandsschicht kann auch bei umregelmäßig geformten Behältern eine lineare Anzeige des Meßinstruments erreicht werden. Auch Behälter, die für den Einbau einer Füllstandsanzeige der herkömmlichen Art unter Verwendung eines Schwimmers wegen ihrer Formgebung nicht genügend Raum bieten, können mit der vorgeschlagenen Vorrichtung vorteilhaft ausgerüstet werden, eine lineare Füllstandsanzeige ist auch dort zu erreichen. Ein für einen Benzintank eines Kraftfahrzeuges günstiger Wert für den Flächenwiderstand einer Widerstandsschicht beträgt 0,6 Ohm pro Quadrat Zentimeter.

Zur Kompensation von Temperatureinflüssen und dergl. ist est vorteilhaft, daß die vorgeschlagene Vorrichtung einen nicht beheizten Vergleichswiderstand enthält, daß dieser Vergleichswiderstand an eine Stromquelle angeschlossen ist, welche einen kleinen, den Widerstand nicht erwärmenden Strom abgibt und daß als Meßsignal die Differenz aus dem Spannungsabfall am Meßwiderstand und dem Spannungsabfall am Vergleichswiderstand ausgewertet wird. Hierzu sind vorteilhaft der Vergleichswiderstand und der Meßwiderstand aus auf einer gemeinsamen Trägerfolie befindlichen Metallschichten gebildet.

Hierbei sind die Metallschichten für den Meß- bzw. den Vergleichswiderstand vorteilhaft deckungsgleich und von gleicher Dicke ausgebildet.

Die vorgeschlagene Vorrichtung weist vorteilhaft eine Schaltung zur Regelung des Stromes in Abhängigkeit von der Temperatur über dem Flüssigkeitsspiegel auf. Die aufgrund der äußeren Bedingungen im Tank herrschende Lufttemperatur $T_L$ und Kraftstofftemperatur $T_B$ beeinflussen grundsätzlich die Anzeige der Vorrichtung. Daraus resultierende Anzeigefehler sind auf elektronischem Wege zu eliminieren. Dies geschieht durch die parallele Anordnung eines Meßwiderstandes $W_I$ und eines Vergleichswiderstandes $W_{II}$. Als Meßsignal wird die Differenz $\Delta U$ zwischen dem Spannungsabfall an $W_I$ und dem — reziprok zu den Strömen durch $W_I$ und $W_{II}$ verstärkten — Spannungsabfall an $W_{II}$ verwertet. Bei gleichbleibender Streifenbreite über die gesamte Länge der Widerstände $W_I$ und $W_{II}$ gilt unter der Annahme, daß in beiden Widerständen aufgrund der äußeren Bedinungen eine gleiche Grundtemperaturverteilung herrscht und sich zu dieser im Meßwiderstand $W_I$ an Luft (bzw. über der Flüssigkeit) die durch Erwärmung erzeugte Übertemperatur $\Delta T$ addiert:

$$\Delta U = J.R.T_{KR}.\Delta T \ (L-h)$$

$J$=Strom durch den Meßwiderstand $W_I$,
$R$=längenbezogener Widerstandswert der beiden aufgedampften Widerstandsstreifen,
$T_{KR}$=Temperaturkoeffizient von $R$,
$h$=Füllstandshöhe im Tank,
$L$=Tankhöhe bzw. Länge der Widerstandsstreifen.

Zur Folge obiger Gleichung ist $\Delta U$ linear abhängig von $h$, die Lufttemperatur $T_L$ und die Kraftstofftemperatur $T_B$ treten explizit nicht mehr auf. Bei Eigenbeheizung von $W_I$ wird die Übertemperatur $\Delta T$ allerdings von $T_L$ mitbestimmt, zwischen beiden Größen besteht ein linearer Zusammenhang. Zur Ausschaltung des impliziten Einflusses von $T_L$ auf $\Delta U$ müssen beim eigenbeheizten Fühler, bei dem also die Erwärmung des Meßwiderstandes durch den Strom im Meßwiderstand erzeugt wird, die Ströme durch die Widerstände $W_I$ und $W_{II}$ im gleichen Verhältnis gegenläufig zur Temperatur $T_L$ geändert werden. Dies ist auf elektronischem Wege mit ausreichender Genauigkeit möglich. Bei Fremdbeheizung von $W_I$, d.h. bei Beheizung durch einen gesonderten Heizleiter, tritt dieses Problem nicht auf, da die über einen separaten Stromleiter zugeführte Wärme unabhängig von der Temperatur $T_L$ erzeugt werden kann. In diesem Fall werden die Widerstände $W_I$ und $W_{II}$ von gleichen, sehr niedrigen Strömen durchflossen, die eine Eigenerwärmung ausschließen. Hierzu eignen sich Ströme unter 1 mA, während für die eigenbeheizten Fühler ein Strom von etwa 40 mA bei einer Streifenbreite von 0,8 mm und einer Dicke der Nickelschicht von etwa 0,15 $\mu$m vorteilhaft ist. Bei dieser Bemessung ergibt sich in Nikkelaufd ampfschichten ein Temperaturunterschied von ca. 15°C zwischen dem in die Flüssigkeit eintauchenden und dem darüber befindlichen Teil von $W_I$. Dem entspricht eine Widerstandsänderung von ca. 10% Diese läßt sich elektronisch ohne weiteres mit der erforderlichen Genauigkeit weiterverarbeiten. Dabei wird nur etwa eine Stromwärme von 0,15 W/cm$^2$ erzeugt. Für die Höhe des Spannungsabfalles am Meßwiderstand reichen hierbei maximal 6 V aus, die aus dem Bordnetz eines Kraftfahrzeugs ohne weiteres entnommen werden können.

In Weiterentwicklung der Erfindung soll eine Verfälschung der Meßergebnisse durch Konvektion im Behälter vermieden werden. Konvektion tritt im Behälter infolge Bewegung, Temperaturdifferenzen und Temperaturänderungen auf. Temperaturdifferenzen im Behälter werden stets durch das Aufheizen des Meßwiderstandes erzeugt. Eine Konvektion insbesondere der Gase über dem Flüssigkeitsspiegel ergibt eine Abkühlung der Widerstandsschicht und damit eine falsche, nicht konstante Anzeige. Dieser Effekt ist überdies stark temperaturabhängig, so daß eine Eichung der Vorrichtung und reproduzierbare Anzeigen in Frage gestellt werden.

Bekannt ist eine Füllstandsmesser unter Verwendung von Widerstandsdrähten, welcher zur Vermeidung von Konvektionseinflüssen in einem Rohr untergebracht ist. Diese Konstruktion ist relativ aufwendig. Das Rohr muß eine beträchtliche Festigkeit aufweisen, um den Bewegungen der Flüssigkeit im Benzintank standzuhalten. Ein Knicken des Rohres würde mit großer Wahrscheinlichkeit zur Beschädigung oder zur Zerstörung des Füllstandsmessers führen. Für einen Füllstandsmesser der hier vorgeschlagenen Art ist ein Rohr außerdem kaum einsetzbar, da vor bzw. hinter dem relativ breiten Träger in dem Rohr ein erhebliches Volumen freibleiben muß, wenn das Rohr die erforderliche Stabilität haben soll. In diesem Volumen befindet sich eine Wärmequelle in Form des beheizten Meßwiderstandes. Dieses Volumen ermöglicht wiederum eine Konvektion, die durch den beheizten Meßwiderstand hervorgerufen wird; der gewünschte Effekt wird nicht erreicht.

Erfindungsgemäß werden diese Nachteile dadurch vermieden, daß in geringem Abstand von der Metallschicht eine Abdeckfolie angeordnet ist und daß diese Abdeckfolie seitlich neben und in der Nähe der Metallschicht mit Abstandsstreifen und diese mit der Trägerfolie in Berührung stehen, in der Längsrichtung der Metallschicht aber in der Nähe ihrer beiden Enden Öffnungen freibleiben.

Diese Vorrichtung hat den Vorteil, daß die Trägerfolie, die Abstandsstreifen und die Abdeckfolie biegsam sind, daß also keine Knickung der Vorrichtung infolge von Bewegungen der Flüssigkeit im Behälter erfolgen kann, und daß trotzdem der eingestellte Abstand zwischen der Trägerfolie und der Abdeckfolie infolge der Anordnung der Abstandsstreifen gewährleistet ist. Ein weiterer Vorteil besteht darin, daß der Abstand zwischen Trägerfolie und Abdeckfolie durch die Wahl der Dicke der Abstandsstreifen ohne Schwierigkeit auf den gewünschten Wert eingestellt werden kann.

Eine Vorrichtung gemäß Erfindung, bei der eine Meßwiderstand und ein Vergleichswiderstand in Form einer zur Metallschicht des Meßwiderstandes deckungsgleichen Metallschicht auf einem gemeinsamen Träger angeordnet sind, weist vorteilhaft die Merkmale auf, daß die Abdeckung beide Metallschichten überdeckt und daß zwischen dem Meßwiderstand und dem Vergleichswiderstand ein Abstandsstreifen vorgesehen ist, welcher parallel zu den Metallschichten verläuft und die Trägerfolie und die Abdeckfolie berührt. Dadurch wird die Spannweite der Abdeckfolie zwischen den Auflagebereichen klein gehalten. Außerdem wird dadurch eine thermische Trennung zwischen dem Meßwiderstand und dem Vergleichswiderstand erreicht, wodurch die beiden Widerstände relativ nahe nebeheinander angeordnet werden können, ohne sich gegenseitig zu beeinflussen.

Die Abdeckfolie wird vorteilhaft als Kunststofffolie ausgebildet. Die Abstandsstreifen sind vorteilhaft mit den Abdeckfolien und den Trägerfolien stoffschlüssig verbunden. Dies erfolgt beispielsweise durch ein Zusammenkaschieren der genannten Streifen mittels eines Klebers. Dieser Aufbau hat den Vorteil, daß eine hohe Festigkeit erreicht ist, so daß die einzelnen Folien relativ dünn gewählt werden können.

Die bisher beschriebenen Ausführungsformen eignen sich insbesondere in Verbindung mit einem wenig wärmeleitfähigen Träger. Sollen dagegen dünne Folien als Träger eingesetzt werden, die gut wärmeleitfähig sind, so ist es vorteilhaft, daß auf beiden Seiten der Trägerfolie Abdeckfolien und Abdeckstreifen zur Trägerfolie spiegelsymmetrisch angeordnet sind. Dadurch wird auf beiden Seiten der Trägerfolie eine Konvektion vermieden.

Um eine Konvektion zwischen Abdeckfolie und Trägerfolie zu vermeiden, ist es vorteilhaft, daß der Abstand zwischen der Abdeckfolie und der Trägerfolie kleiner ist als 5 mm. Besonders vorteilhaft beträgt dieser Abstand zwischen etwa 1 mm und 2 mm. Dadurch wird einerseits eine Konvektion zwischen Trägerfolie und Abdeckfolie vermieden und andererseits eine störende Kapillarwirkung noch nicht hervorgerufen.

Die Trägerfolie ist vorteilhaft 50 $\mu$m dick, um die notwendige Festigkeit zu gewährleisten. Eine so dicke Trägerfolie kann auch der beim Aufdampfen der relativ dicken, z.B. 0,2 $\mu$m dicken, Widerstandsmetallschichten auftretenden thermischen Belastung ohne Schädigung und Formveränderung standhalten. Bereits mit einer relativ schmalen Widerstandsschicht von etwa 0,5 mm Breite und entsprechend niedrigen Stromstärken bei direkter Erwärmung von beispielsweise weniger als 40 mA wird ein Fühler mit einer geringen thermischen Trägheit erreicht. Wird eine Trägerfolie von 50 $\mu$m Dicke aus Polyimid eingesetzt, so ist vorteilhaft zwischen den Rändern der Widerstandsschichten und den jeweils benachbarten Abstandsstreifen ein Mindestabstand von 3 mm freigelassen, um eine störende Wärmeableitung von der Widerstandsschicht zu vermeiden.

Vorteilhaft sind Abstandsstreifen und Abdeckfolie miteinander einstückig, die Trägerfolie aber stoffschlüssig mit diesen Schichten verbunden. Die Abstandsfolie und die mit dieser einstückig verbundenen Abstandsstreifen sind vorteilhaft aus Polyamiden im Strangpreß- oder Strangzieh-verfahren hergestellt. Anstelle der Polyamide können auch andere Thermoplaste, insbesondere Polyacetate, Polyäthylenterephthalat, Polybutylenterephthalat, Polyarylsulfat oder Fluorpolymere eingesetzt werden. Insbesondere die folgenden Fluorpolymere sind hierfür geeignet: Polychlortrifluoräthylen (PCT FE), Copolymerisat aus Tetrafluoräthylen und Hexafluorpropylen (PFEP), Polyvinylidenfluorid (PVDF) und Polyvinylfluorid (PVF).

Bei einem Aufbau aus Einzelteilen können diese aus gleichen oder verschiedenen Materialien bestehen, z.B. aus Epoxiharz-Glasfasergewebe, Schichtpreßstoffen, Duroplasten, Thermoplasten. Als Thermoplaste eignen sich auch hierfür die oben angegebenen Stoffe. Die beschriebene Ausführungsform unter Verwendung von Polyamiden besitzt besonders günstige mechanische Eingeschaften, insbesondere eine hohe Beigeelastizität und ist gegen Triebstoffe beständig.

Die Erfindung wird anhand von vier Figuren näher erläutert. Sie ist nicht auf die in den Figuren gezeigten Beispiele beschränkt.

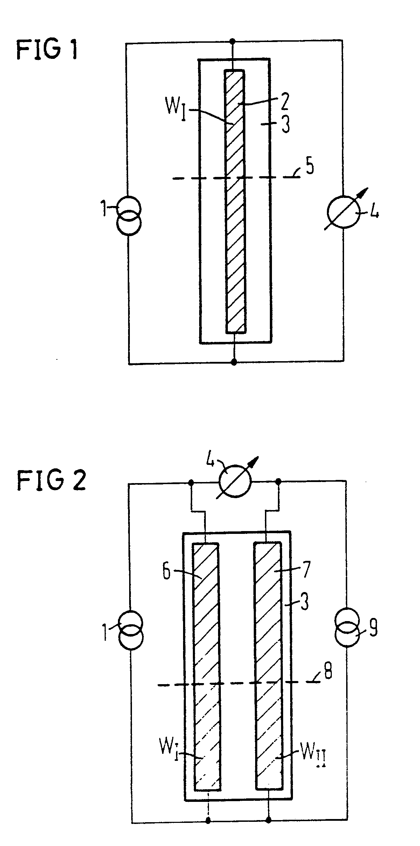

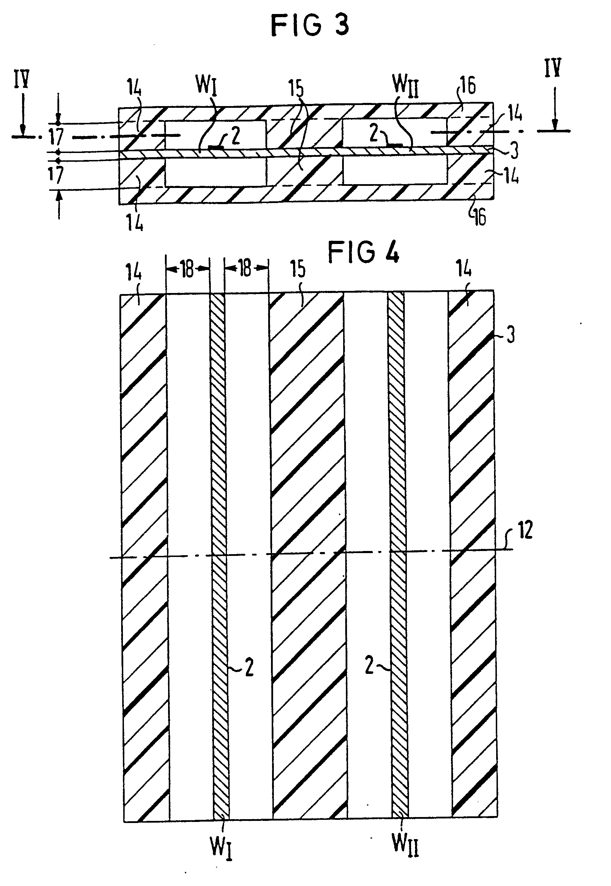

Die Figuren 1 und 2 zeigen zwei Ausführungsbeispiele schematisch. Die Figuren 3 und 4 zeigen einen gegen Wärmeverluste durch Konvektion geschützten Aufbau in zwei geschnittenen Darstellungen.

Eine Konstantstromquelle 1 bewirkt einen vom Flüssigkeitsstand unabhängigen Strom im Meßwiderstand $W_I$, welcher aus einer isolierenden Trägerfolie 3 und einer schraffiert dargestellten Metallschicht 2 aufgebaut ist. Der Meßwiderstand $W_I$ taucht in eine Flüssigkeit ein. Oberhalb des Flüssigkeitsspiegels 5 erwärmt sich die Metallschicht 2 wesentlich stärker als unterhalb des Flüssigkeitsspiegels 5. Ein Meßgerät 4 mißt den Spannungsabfall am Meßwiderstand $W_I$.

Eine Temperaturkompensation wird bei einer Ausführungsform gemäß Fig. 2 erreicht. Dort wird ein Meßwiderstand $W_I$ aus einer Metallschicht 6 auf einer Trägerfolie 3 gebildet und ein Vergleichswiderstand $W_{II}$ aus einer dekkungsgleichen, schraffiert dargestellten Metallschicht 7 auf derselben Trägerfolie 3. Eine Konstantstromquelle 1 läßt durch den Meßwiderstand $W_I$ einen zur Erwärmung des über dem Flüssigkeitsspiegel 8 befindlichen Teiles ausreichenden Strom fließen. Eine zweite Konstantstromquelle 9 bewirkt ebenfalls im Vergleichswiderstand $W_{II}$ einen vom Füllstand unabhängigen Strom. Dieser Strom ergibt keine störende Erwärmung des Vergleichswiderstandes $W_{II}$. Ein Meßinstrument 4 mißt die Differenz zwischen dem Spannungsabfall an $W_I$ und dem im Verhältnis des Stromes durch $W_I$ zum Strom durch $W_{II}$ verstärkten Spannungsabfall an $W_{II}$. Eine ausreichende Differenz dieser Spannungsabfälle ist bei deckungsgleicher Ausbildung der Widerstände $W_I$ und $W_{II}$ gegeben, wenn der Strom durch den Meßwiderstand $W_I$ um den Faktor 10 größer ist als der Strom durch den Vergleichswiderstand $W_{II}$. In diesem Falle ergibt sich ein Verhältnis der abgegebenen Leistung von 100:1.

Der Meßwiderstand $W_I$ kann auch indirekt beheizt werden. In diesem Fall wird vorzugsweise eine deckungsgleiche Metallschicht mit einem möglichst geringen Temperaturkoeffizienten des Widerstandswertes durch eine isolierende Schicht von dem Meßwiderstand $W_I$ getrennt deckungsgleich mit diesem aufgebracht. Sie kann beispielsweise auf der Rückseite der Trägerfolie 3 aufgebracht werden. In diesem Fall werden sowohl durch den Meßwiderstand $W_I$ als auch durch den Vergleichswiderstand $W_{II}$ nur geringe Meßströme geschickt. Die nicht dargestellte Widerstandsschicht wird dann durch den für die Erwärmung erforderlichen, ebenfalls von der Füllstandshöhe unabhängigen Strom durchflossen.

Zur Messung der Füllstandshöhe von elektrisch nicht leitenden Flüssigkeiten können die Widerstandsschichten freiliegen. Sollen aber Flüssigkeiten mit störender elektrischer Leitfähigkeit gemessen werden, so empfiehlt es sich, über den Widerstandsschichten eine elektrisch isolierende Schicht anzubringen. Diese kann beispielsweise auflackiert werden (Fig. 1 und 2).

Zum Schutz gegen Wärmeverluste durch Konvektion sind auf einer gemeinsamen Trägerfolie 3 ein Meßwiderstand $W_I$ und ein Vergleichswiderstand $W_{II}$ in Form von zwei deckungsgleichen Metallschichten angeordnet. Der Meßwiderstand $W_I$ und der Vergleichswiderstand $W_{II}$ sind mit je einer Stromquelle in Serie geschaltet, welche einen von der Füllstandshöhe unabhängigen Strom liefert. Ein relativ hoher Strom heizt den Meßwiderstand $W_I$ im Bereich über dem Flüssigkeitsspiegel 12 auf. Unter dem Flüssigkeitsspiegel 12 wird der Meßwiderstand aufgrund der höheren Wärmeleitfähigkeit der Flüssigkeit gekühlt, so daß dort keine meßbare Aufheizung stattfindet. Ein vom Füllstand unabhängiger Strom von nur geringer Stromstärke heizt den Vergleichswiderstand $W_{II}$ nicht meßbar auf. Ein Meßinstrument 11 mißt die Differenz zwischen der am Meßwiderstand $W_I$ abfallenden Spannung und der mit dem Verhältnis des Stromes durch den Meßwiderstand $W_I$ zu dem Strom durch den Vergleichswiderstand $W_{II}$ multiplizierten Spannungsabfall am Vergleichswiderstand $W_{II}$. Diese Differenz ist eine Maß für den Füllstand.

In einem Füllstandsmesser gemäß Figur 1 würde bei Temperaturschwankungen der über dem Flüssigkeitsspiegel 12 liegende Teil des Meßwiderstandes $W_I$ durch Konvektion im Gas, welches ihn umgibt, ungleichmäßig gekühlt werden. Dieser Kühleffekt würde mit der Temperatur ansteigen. Dadurch würde das Meßergebnis erheblich verfälscht. Um auch bei Temperaturschwankungen eine reproduzierbare Anzeige zu erreichen, sind sowohl der Meßwiderstand $W_I$ als auch der Vergleichswiderstand $W_{II}$ durch Abdeckfolien 16 geschützt, welche durch Abstandsstreifen 14 und 15 in einem gewünschten Abstand 7 von dem Träger bzw. den Widerständen $W_I$ und $W_{II}$ gehalten werden. Die Abstandsstreifen 15 dienen gleichzeitig als Wärmebremse, indem sie eine Wärmeleitung vom Meßwiderstand $W_I$ zum Vergleichswiderstand $W_{II}$ weitgehend ver-

hindern. Dadurch kann der Abstand zwischen dem Meßwiderstand $W_I$ und dem Vergleichswiderstand $W_{II}$ relativ klein gewählt werden. Zwischen den Abstandsstreifen 14 bzw. 15 und dem Meßwiderstand $W_I$ wird ein Mindestabstand 18 eingehalten, um eine Verfälschung der Messung durch Wärmeleitung innerhalb der Trägerfolie 3 zu vermeiden.

Sofern die Trägerfolie 3 eine gewünschte Wärmeisolation bewirkt, können die Abdeckfolie 16 und die zugehörigen Abstandsstreifen 14 und 15 auf der von den Widerständen $W_I$ und $W_{II}$ abgewandten Seite der Trägerfolie 3 entfallen. Sofern der Strom durch den Vergleichswiderstand $W_{II}$ entsprechend klein gehalten wird, genügt es, wenn die Abdeckfolien 16 nur den Meßwiderstand $W_I$ überdecken, nicht aber den Vergleichswiderstand $W_{II}$. Der Abstand 17 beträgt vorteilhaft 1 mm bis 2 mm, um einerseits eine Konvektion zwischen der Abdeckfolie 16 und der Trägerfolie 3 zu vermeiden und andererseits eine störende Kapillarwirkung nicht hervorzurufen. Der Abstand 18 beträgt bei einer 50 $\mu$m dikken Trägerfolie aus Polyimid beispielsweise zumindest 3 mm, um eine Beeinflussung der Meßergebnisse durch Wärmeableitung über die Trägerfolie 3 zu vermeiden.

**Patentansprüche**

1. Vorrichtung zur Messung des Füllstandes in einem mit Flüssigkeit zumindest teilweise gefüllten Behälter, insbesondere in einem Kraftstofftank, welche einen temperaturabhängigen elektrischen Widerstand enthält, der aus einer isolierenden Trägerfolie mit darauf angeordneter Metallschicht besteht und Vorrichtungen aufweist, die eine Beheizung des Widerstandes bewirken, und welche ein Meßgerät enthält, welches eine durch die Änderung des Füllstandes bewirkte Änderung des Widerstandswertes anzeigt und in welcher diese Änderung des Widerstandswertes als Maß für den Flüssigkeitsstand dient, dadurch gekennzeichnet, daß die Metallschicht (2) aus Eisen oder Nickel besteht, daß der Flächenwiderstand der Metallschicht (2) etwa 0,6 $\Omega/cm^2$ beträgt, und daß die Breite der Metallschicht (2) zumindest um den Faktor 10 größer ist als die Dicke der isolierenden Trägerfolie (3).

2. Vorrichtung nach Anspruch 1, dadurch gekennzeichnet, daß die Metallschicht (2) ein Verhältnis ihrer Breite zu ihrer Dicke von mehr als 100:1 aufweist.

3. Vorrichtung nach Anspruch 1 oder 2, dadurch gekennzeichnet, daß als isolierender Träger (3) eine Kunststoffolie dient.

4. Vorrichtung nach einem der Ansprüche 1 bis 3, dadurch gekennzeichnet, daß sie einen nicht beheizten Vergleichswiderstand $(W_{II})$ enthält, daß dieser Vergleichswiderstand $(W_{II})$ an eine Stromquelle (9) angeschlossen ist, welche einen kleinen, den Widerstand nicht erwärmenden Strom abgibt und daß als Meßsignal die Differenz aus dem Spannungsabfall am Meßwiderstand $(W_I)$ und dem im Verhältnis des Stromes durch den Meßwiderstand $(W_I)$ zum Strom durch den Vergleichswiderstand $(W_{II})$ verstärkten Spannungsabfall am Vergleichswiderstand $(W_{II})$ ausgewertet wird.

5. Vorrichtung nach Anspruch 4, dadurch gekennzeichnet, daß der Vergleichswiderstand $(W_{II})$ und der Meßwiderstand $(W_I)$ aus auf einer gemeinsamen Trägerfolie (3) befindlichen Metallschichten (6, 7) gebildet sind.

6. Vorrichtung nach Anspruch 5, dadurch gekennzeichnet, daß die Metallschichten (6, 7) für den Meßwiderstand $(W_I)$ bzw. den Vergleichswiderstand $(W_{II})$ deckungsgleich und von gleicher Dicke und aus gleichem Material gebildet sind.

7. Vorrichtung nach einem der Ansprüche 1 bis 6, dadurch gekennzeichnet, daß sie eine elektronische Schaltung zur Regelung des Stromes in Abhängigkeit von der Temperatur über dem Flüssigkeitsspiegel enthält.

8. Vorrichtung nach Anspruch 1, dadurch gekennzeichnet, daß zur Beheizung des Meßwiderstandes $(W_I)$ eine gesonderte Heizung vorgesehen ist und daß der Meßwiderstand $(W_I)$ nur durch einen geringen Meßstrom durchflossen wird, welcher ihn nicht aufheizt.

9. Vorrichtung nach einem der Ansprüche 1 bis 8, dadurch gekennzeichnet, daß in geringem Abstand (7) vor der Metallschicht (2) eine Abdeckfolie (16) angeordnet ist und daß diese Abdeckfolie (16) seitlich neben und in der Nähe der Metallschicht (2) mit biegsamen Abstandsstreifen (14, 15) und daß diese mit der Trägerfolie (3) in Berührung stehen, in Längsrichtung der Metallschicht (2) aber in der Nähe ihrer beiden Enden Öffnungen freibleiben.

10. Vorrichtung nach Anspruch 9, bei der ein Meßwiderstand und ein Vergleichswiderstand in Form einer zur Metallschicht des Meßwiderstandes dekkungsgleichen Metallschicht auf einer gemeinsamen Trägerfolie angeordnet sind, dadurch gekennzeichnet, daß die Abdeckfolie (16) beide Metallschichten (2) überdeckt und daß zwischen dem Meßwiderstand $(W_I)$ und dem Vergleichswiderstand $(W_{II})$ ein Abstandsstreifen (15) vorgesehen ist, der parallel zu den Metallschichten (2) verläuft und die Trägerfolie (3) und die Abdeckfolie (16) berührt.

11. Vorrichtung nach einem der Ansprüche 9 oder 10, dadurch gekennzeichnet, daß auf beiden Seiten der Trägerfolie (3) Abdeckfolien (16) und Abstandsstreifen (14, 15) zur Trägerfolie spiegelsymmetrisch angeordnet sind.

12. Vorrichtung nach einem der Ansprüche 9 bis 11, dadurch gekennzeichnet, daß der Abstand zwischen der Abdeckfolie (16) und der Trägerfolie (3) kleiner ist als 5 mm.

13. Vorrichtung nach einem der Ansprüche 9 bis 11, dadurch gekennzeichnet, daß der Abstand zwischen der Abdeckfolie (16) und der Trägerfolie (3) etwa zwischen 1 mm und 2 mm beträgt.

14. Vorrichtung nach einem der Ansprüche 9 bis 13, dadurch gekennzeichnet, daß die Metallschicht (2) etwa 0,5 mm breit ist und daß eine Vorrichtung zur Begrenzung des Stromes auf höchstens 40 mA vorhanden ist.

15. Vorrichtung nach einem der Ansprüche 9 bis 14, dadurch gekennzeichnet, daß die Trägerfolie (3) 50 µm dick ist und aus Polyimid besteht und daß zwischen den Rändern der Metallschicht (2) und den jeweils benachbarten Abstandsstreifen (14, 15) ein Mindestabstand von 3 mm besteht.

16. Vorrichtung nach einem der Ansprüche 9 bis 15, dadurch gekennzeichnet, daß die Abstandsstreifen (14, 15) und die Abdeckfolie (16) miteinander einstückig und mit der Trägerfolie (3) stoffschlüssig verbunden sind.

**Revendications**

1. Dispositif pour la mesure du niveau de remplissage d'un récipient rempli au moins partiellement de liquide, notamment d'un réservoir de carburant, qui comprend une résistance électrique, variable en fonction de la température, constituée d'un feuille-support isolante sur laquelle est disposée une couche métallique, et des dispositifs qui provoquent un chauffage de la résistance, et qui comprend un appareil de mesure, qui indique une variation de la valeur de la résistance provoquée par la variation du niveau de remplissage, et dans lequel cette variation de la valeur de la résistance sert de mesure pour le niveau du liquide, caractérisé en ce que la couche (2) métallique est en fer ou en nickel, en ce que la résistance superficielle de la couche (2) métallique s'élève à 0,6 ohm/cm² environ, et en ce que la largeur de la chouche (2) métallique est plus grande d'au moins le facteur de 10 que l'épaisseur de la feuille-support (3) isolante.

2. Dispositif suivant la revendication 1, caractérisé en ce que la couche (2) métallique présente un rapport de sa largeur à son épaisseur supérieure à 100:1.

3. Dispositif suivant la revendication 1 ou 2, caractérisé en ce qu'une feuille de matière plastique sert de support (3) isolant.

4. Dispositif suivant l'une des revendications 1 à 3, caractérisé en ce qu'il comprend une résistance ($W_{II}$) de comparaison qui n'est pas chauffée, en ce que cette résistance ($W_{II}$) de comparaison est raccordée à une source (9) de courant électrique qui fournit un courant petit n'échauffant pas la résistance, et en ce que la différence entre la chute de tension entre les bornes de la résistance ($W_I$) de mesure et la chute de tension entre les bornes de la résistance ($W_{II}$) de comparaison, amplifiée dans le rapport du courant passant dans la résistance ($W_I$) mesure au courant passant dans la résistance ($W_{II}$) de comparaison, est exploitée comme signal de mesure.

5. Dispositif suivant la revendication 4, caractérisé en ce que la résistance ($W_{II}$) de comparaison et la résistance ($W_I$) de mesure sont constituées de couches (6, 7) métalliques se trouvant sur une feuille-support (3) commune.

6. Dispositif suivant la revendication 5, caractérisé en ce que les couches (6, 7) métalliques pour la résistance ($W_I$) de mesure et pour la résistance ($W_{II}$) de comparaison recouvrent des surfaces identiques, ont la même épaisseur, et sont en le même matériau.

7. Dispositif suivant l'une des revendications 1 à 6, caractérisé en ce qu'il comprend un circuit électronique de régulation du courant en fonction de la température au-dessus de la face libre du liquide.

8. Dispositif suivant la revendication 1, caractérisé en ce que, pour l'échauffement de la résistance ($W_I$) de mesure, est prévue un chauffage particulier, et en ce que la résistance ($W_I$) de mesure est parcourue par un courant de mesure petit qui ne l'échauffe pas.

9. Dispositif suivant l'une des revendications 1 à 8, caractérisé en ce qu'à faible distance (7) de la couche (2) métallique est disposée une feuille (16) de recouvrement, et en ce que cette feuille (16) de recouvrement est en contact latéralement à côté et au voisinage de la couche (2) métallique avec des bandes (14, 15) intercalaires, et en ce que ces bandes intercalaires sont en contact avec la feuille-support (3), mais des ouvertures restent dégagées dans la direction longitudinale de la couche métallique, au voisinage de ses deux extrémités.

10. Dispositif suivant la revendication 9, dans lequel une résistance de mesure et une résistance de comparaison, sous forme d'une couche métallique recouvrant une surface identique à une couche métallique de la résistance de mesure, sont disposées sur une feuille-support commune, caractérisé en ce que la feuille (16) de recouvrement recouvre les deux couches (2) métalliques, et en ce que, entre la résistance ($W_I$) de mesure et la résistance ($W_{II}$) de comparaison, est interposée une bande (15) intercalaire, qui s'étend parallèlement aux couches (2) métalliques et qui est en contact avec la feuille-support (3) et avec la feuille (16) de recouvrement.

11. Dispositif suivant l'une des revendications 9 ou 10, caractérisé en ce que des deux côtés de la feuille-support (3) sont disposées, symétriquement comme en un miroir par rapport à la feuille-support, des feuilles (16) de recouvrement et des bandes (14, 15) intercalaires.

12. Dispositif suivant l'une des revendications 9 à 11, caractérisé en ce que l'écartement entre la feuille (16) de recouvrement et la feuille-support (3) est inférieur à 5 mm.

13. Dispositif suivant l'une des revendications 9 à 11, caractérisé en ce que l'écartement entre la feuille (16) de recouvrement et la feuille (3) support est compris entre 1 mm et 2 mm environ.

14. Dispositif suivant l'une des revendications 9 à 13, caractérisé en ce que la couche (2) métallique a une largeur de 0,5 mm environ, et en ce qu'il y a un dispositif pour limiter le courant à 40 mA au plus.

15. Dispositif suivant l'une des revendications 9 à 14, caractérisé en ce que la feuille-support (3) a une épaisseur de 50 μm et est en polyimide, et en ce que, entre les bords de la couche (2) métallique et les bandes (14, 15) intercalaires voisines, il y a une distance d'au moins 3 mm.

16. Dispositif suivant l'une des revendications 9 à 15, caractérisé en ce que les bornes (14, 15) intercalaires et la feuille (16) re recouvrement sont d'une pièce les unes avec l'autre, et sont reliées à la feuille-support (3) par complémentarité de matière.

## Claims

1. Apparatus for measuring the level of filling in a container, in particular a fuel tank, which is at least partially filled with liquid, which apparatus comprises a temperature-dependent electrical resistance, which consists of an insulating foil having a metal layer arranged thereon, devices for effecting heating of the resistor, and a measuring apparatus which indicates a change of resistance value caused by change of the filling level, and which change of the resistance value serves as a measure of the filling level, characterised in that the metal layer (2) consists of iron or nickel; that the surface resistance of the metal layer (2) is approximately 0.6 $\Omega/cm^2$; and that the width of the metal layer (2) is greater than the thickness of the insulating carrier foil (3) by at least a factor of 10.

2. Apparatus according to Claim 1, characterised in that the metal layer (2) has a ratio of its width to its thickness of greater than 100:1.

3. Apparatus according to Claim 1 or Claim 2, characterised in that a synthetic resin foil serves as the insulating carrier (3).

4. Apparatus according to any one of Claims 1 to 3, characterised in that it includes an unheated comparison resistor $(W_{II})$; that this comparison resistor $(W_{II})$ is connected to a current source (9) which delivers a small current which does not heat the resistor; and that the difference between the voltage drop at the measuring resistor $(W_I)$ and the voltage drop at the comparison resistor $(W_{II})$, which has been amplified in the ratio of the current through the comparison resistor $(W_I)$ to the current through the comparison resistor $(W_{II})$ is evaluated as measuring signal.

5. Apparatus according to Claim 4, characterised in that the comparison resistor $(W_{II})$ and the measuring resistor $(W_I)$ are formed from metal layers (6, 7) arranged on a common carrier foil (3).

6. Apparatus according to Claim 5, characterised in that the metal layers (6, 7) for the measuring resistor $(W_I)$ and the comparison resistor $(W_{II})$ cover like areas, are of the same thickness and consist of the same material.

7. Apparatus according to one of Claims 1 to 6, characterised in that it includes an electronic circuit for regulating the current in dependence upon the temperature above the surface of the liquid.

8. Apparatus according to Claim 1, characterised in that, in order to heat the measuring resistor $(W_I)$, separate heating is provided, and that only a small measuring current which does not heat the measuring resistor $(W_I)$ flows through the latter.

9. Apparatus according to one of Claims 1 to 8, characterised in that a cover foil (16) is arranged at a small distance (7) from the metal layer (2), that this cover foil (16) is in contact with flexible spacing strips (14, 15) laterally beside and in the vicinity of the metal layer (2), and that these spacing strips (14, 15) are in contact with the carrier foil (3) in the longitudinal direction of the metal layer (2), but in the vicinity of both their ends, openings are left free.

10. Apparatus according to Claim 9, in which a measuring resistor and a comparison resistor in the form of a metal layer, covering a similar area to the metal layer of the measuring resistor, are arranged on a common carrier, characterised in that the cover foil (16) covers both metal layers (2) and that between the measuring resistor $(W_I)$ and the comparison resistor $(W_{II})$, there is arranged a spacing strip (15) which runs parallel to the metal layers (2) and is in contact with the carrier foil (3) and the cover foil (16).

11. Apparatus according to one of Claims 9 or 10, characterised in that on both sides of the carrier foil (3), cover foils (16) and spacing strips (14, 15) are arranged so as to be enantiomorphic with respect to the carrier foil.

12. Apparatus according to one of Claims 9 to 11, characterised in that the spacing between the cover foil (16) and the carrier foil (3) is less than 5 mm.

13. Apparatus according to one of Claims 9 to 11, characterised in that the spacing between the cover foil (16) and the carrier foil (3) is about between 1 mm and 2 mm.

14. Apparatus according to one of Claims 9 to 13, characterised in that the metal layer (2) is about 0.5 mm wide, and that means is provided for limiting the current to a maximum of 40 mA.

15. Apparatus according to one of Claims 9 to 14, characterised in that the carrier foil (3) is 50 μm thick and consists of polyimide, and that there is a minimum spacing of 3 mm between the edges of the metal layer (2) and the respectively adjacent spacing strips (14, 15).

16. Apparatus according to one of Claims 9 to 15, characterised in that the spacing strips (14, 15) and the cover foil (16) are formed integrally with one another and are connected to the carrier foil (3) so as to be materially bonded thereto.

FIG 1

$W_I$ — 2
— 3

1 — 5

— 4

FIG 2

4

6 — 7
— 3

1 — 9

— 8

$W_I$ — $W_{II}$

## FIG 3

## FIG 4